Europäisches Patentamt

European Patent Office

Office européen des brevets

(11) Veröffentlichungsnummer: **0 078 376**
A2

## EUROPÄISCHE PATENTANMELDUNG

(21) Anmeldenummer: 82107886.2

(22) Anmeldetag: 27.08.82

(51) Int. Cl.³: **H 04 N 1/06**

(30) Priorität: **31.10.81 DE 3143342**

(43) Veröffentlichungstag der Anmeldung: **11.05.83**
**Patentblatt 83/19**

(84) Benannte Vertragsstaaten: **AT BE CH FR GB IT LI NL SE**

(71) Anmelder: **DR.-ING. RUDOLF HELL GmbH,**
**Grenzstrasse 1-5, D-2300 Kiel 14 (DE)**

(72) Erfinder: **Balzelt, Ralf, Feldstrasse 2, D-2308 Preetz (DE)**
Erfinder: **Dinse, Wolfgang, Kiefernweg 4,**
**D-2300 Altenholz (DE)**
Erfinder: **Gesell, Reinhard, Weidenkamp 17,**
**D-2301 Schönkirchen (DE)**

(54) Trommel für Trommelscanner.

(57) Walze für Trommelscanner, die aus einem hohlen zylindrischen Körper besteht, der an seinen Enden gelagert
ist und mit Saugöffnungen zur Aufnahme eines Aufzeichnungsträgers bzw. eines Originals versehen ist. Der zylindrische Walzenkörper ist aus einer Vielzahl von einzelnen
Elementen zusammengesetzt, die mittels einer Stange, die
an den Deckelenden des Walzenkörpers verschraubbar ist,
zusammengehalten werden und außerdem miteinander
verklebt sind.

## Beschreibung

Trommel für Trommelscanner

## Technisches Gebiet

Die vorliegende Erfindung betrifft eine Walze für Trommelscanner, bestehend aus einem hohlen zylindrischen Körper, der an seinen Stirnenden drehbar gelagert ist.

## Zugrundeliegender Stand der Technik

Trommelscanner weisen entgegen Flachbettscannern auf der Abtastseite und auf der Aufzeichnungsseite schnell rotierende Walzen auf, auf denen auf der Abtastseite das abzutastende Original und auf der Aufzeichnungsseite der Aufzeichnungsträger befestigt sind. Um eine hohe Arbeitsgeschwindigkeit bei solchen Scannern zu erhalten, ist es erforderlich, die Walze schnell rotieren zu lassen, was einerseits zu hohen Fliehkräften führt und aufgrund der heute erwünschten großformatigen Vorlagen eine stabile Bauweise der Walzen erforderlich macht. Um den Aufzeichnungsträger auch bei hohen Drehzahlen auf der Walze halten zu können, weist die Walze in ihrer Oberfläche Saugöffnungen auf, die mit einem im Inneren der Walze herrschenden Vakuum verbunden sind. So wird erreicht, daß auch Spannvorrichtungen wegfallen können, die bei hohen Drehzahlen zu einer unerwünschten Unwucht führen könnten. Wegen der bei der Bildverarbeitung erforderlichen hohen Präzision kommt es bei der Geometrie der Oberfläche der Walze ebenfalls auf eine hohe mechanische Präzision an. Bei der bisherigen Art der Walzenherstellung, sei es durch Abdrehen fertiger Rohre oder durch Ausdrehen der Walzen aus vollem Material kommt es zu relativ hohen Kosten und einer schweren Bauweise der Walzen.

## Offenbarung der Erfindung

Der vorliegenden Erfindung liegt daher die Aufgabe zugrunde, eine neuartige Walze zu schaffen, die den vielseitigen an sie gestellten Forderungen gerecht wird und den Nachteil der bekannten Walze vermeidet. Die Erfindung erreicht dies dadurch, daß der zylindrische Walzenkörper aus einer Anzahl von topfartigen Gebilden besteht, die ineinander geschoben und miteinander verklebt sind. Eine weitere Ausführungsform der Erfindung besteht darin, daß der zylindrische Walzenkörper aus einer Anzahl von topfartigen Gebilden und Ringen besteht, die ebenfalls ineinander geschoben und miteinander verklebt sind. Eine weitere Aus-

- 3 -                    0078376

führungsform kann darin bestehen, daß der
zylindrische Walzenkörper aus einer Anzahl von
Ringen besteht, die an ihren Stoßstellen mittels
Laschenringen verbunden und verklebt sind. Eine
runde Blechplatte sorgt außerdem für den Erhalt
der runden Form. Walzen, bei denen eine Kombination
der vorgenannten Konstruktionsmerkmale verwendet
wird, fallen ebenfalls in den Rahmen der vorliegenden Erfindung. Vorteilhafte Weiterbildungen
der Erfindung sind in den Unteransprüchen
beschrieben.

Kurze Beschreibung der Erfindung

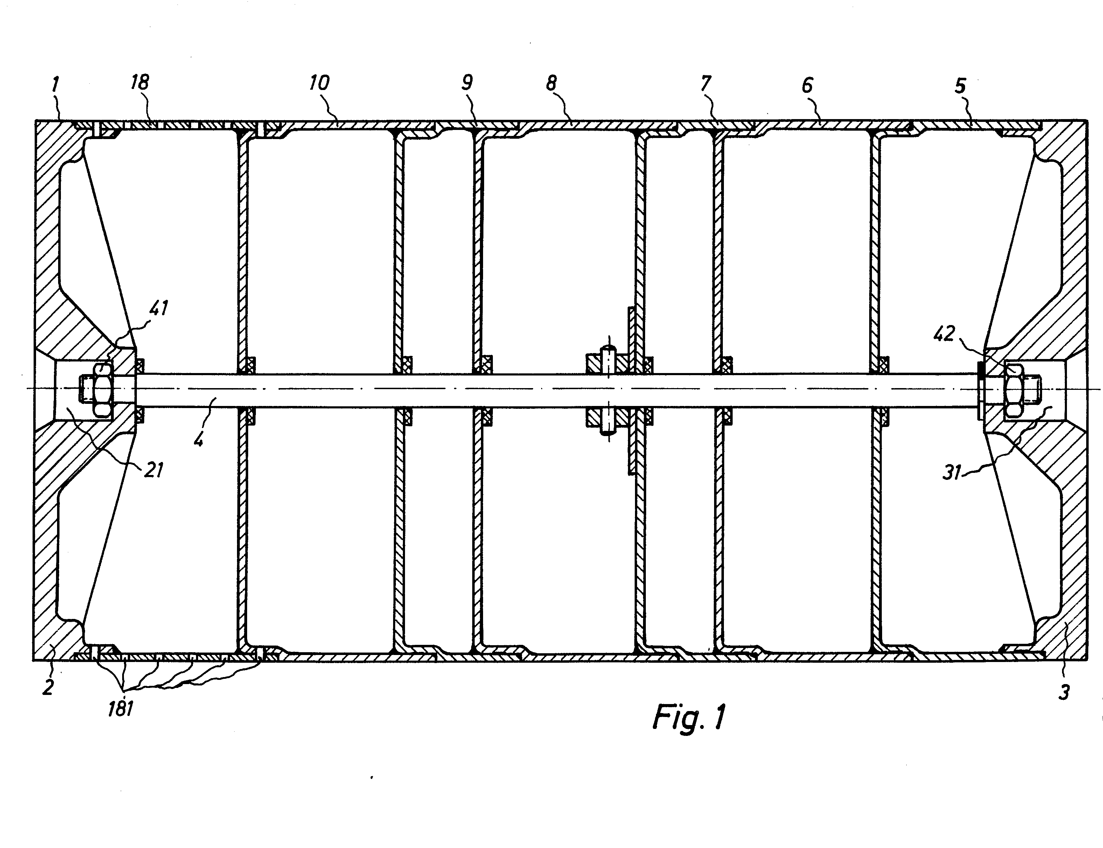

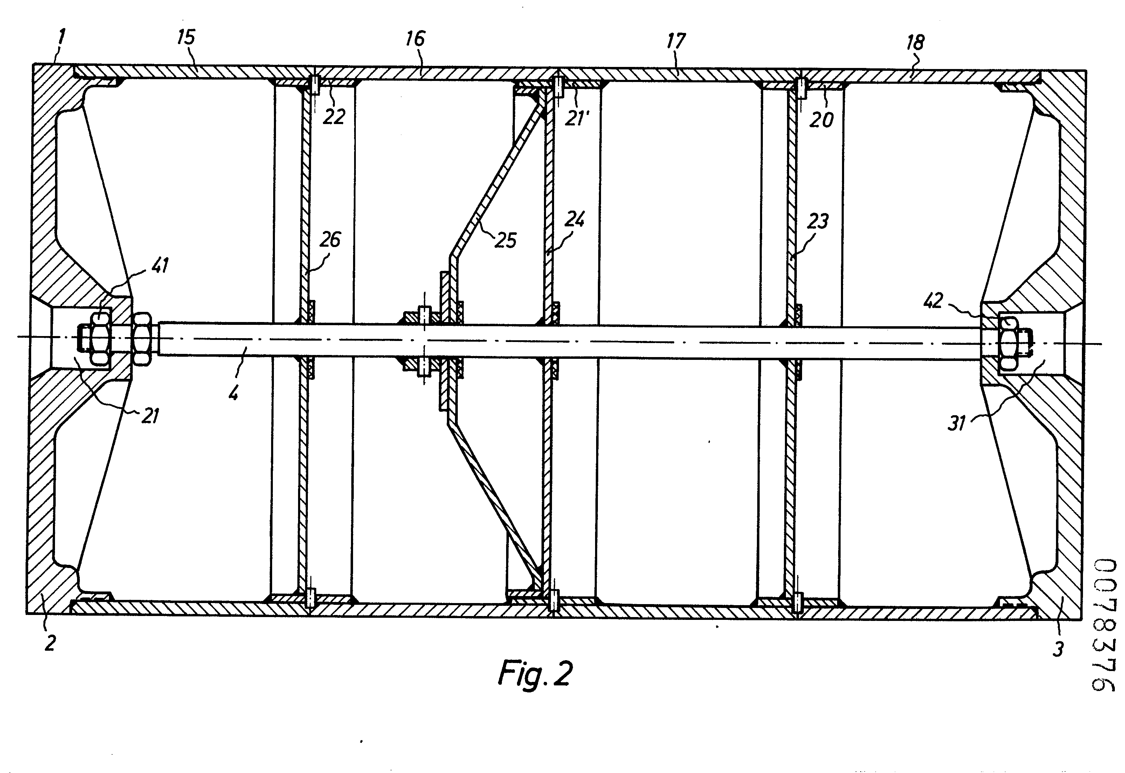

Die Erfindung wird im folgenden anhand der
Figuren 1 und 2 näher erläutert.
Es zeigen:

Figur 1     eine Ausführungsform der Erfindung mit
            topfartigen ineinander geschobenen Gebilden und
Figur 2     eine Ausführungsform der Erfindung mit
            Ringen, die mittels Laschenringen miteinander verbunden sind.

Bester Weg zur Ausführungsform der Erfindung

Figur 1 zeigt eine Walze 1, die erfindungsgemäß
aus mehreren Teilen zusammengesetzt ist. An den
Stirnseiten sind Deckel 2 und 3 vorgesehen, die
im zentralen Bereich je eine Ausnehmung 21 bzw. 31
haben, in die eine durch die Walze 1 hindurchgehende Stange 4 greift und an den Stirnenden mittels Muttern 41 und 42 verspannt ist.
Der eigentliche zylindrische Walzenkörper besteht
aus topfartigen Gebilden 5 bis 10, die ineinandergeschoben sind, wobei an dem einen Ende der
Walze ein Ring 18 vorgesehen ist, um mit dem
Deckel 1 einen Abschluß zu erhalten. Wie aus der
Zeichnung zu ersehen ist, sind die topfartigen
Gebilde 5 bis 10 an ihren Bodenenden eingezogen,
damit das nächste Element darüber gestülpt werden
kann. Die Verbindungsstellen zwischen den einzelnen Elementen sind beim Zusammenbau mit Klebstoff
gefüllt, und durch die Stange 4 und die Muttern 41
und 42 wird der Walzenkörper zusammengezogen, so
daß sich unter der Voraussetzung, daß die einzelnen Elemente an ihren Enden sauber gefertigt sind,
ein exakt zylindrischer Körper ergibt. Um das aufzuspannende Material, sei es das Original oder der
Aufzeichnungsträger, auf der rotierenden Walzenoberfläche zu halten, sind in der Walzenoberfläche
Sauglöcher 181 vorgesehen, die in Figur 1 nur für
das Element 18 eingezeichnet worden sind. Selbstverständlich ist die Walzenoberfläche in ihrer
gesamten Oberfläche mit mehreren Reihen solcher
Sauglöcher versehen, die mit einem im Inneren der
Walze herrschenden Vakuum in Verbindung stehen.

Figur 2 zeigt eine ähnliche Konstruktion einer
Walze 1, die an ihren Enden ebenfalls mit der
Figur 1 vergleichbare Deckel 2 und 3 aufweist, die
ebenfalls Ausnehmungen 21 und 31 aufweisen, in die
eine Stange 4 greift, die mittels der Schrauben
41 und 42 wiederum die einzelnen Elemente verspannt. Anstelle der topfartigen Gebilde der

0078376

Figur 1 sind hier ringartige Elemente 15, 16, 17 und 18 vorgesehen, die mit Laschenringen 20, 21' und 22 an ihren Stoßstellen von innen miteinander verbunden und verklebt sind. Zur Erhöhung der Steifigkeit sind noch scheibenartige Körper 23, 24, 25 und 26 vorgesehen, welche den Außenmantel des Zylinders abstützen und die runde Form diktieren. Auch bei dieser Ausführungsform ist im Falle, daß man dafür sorgt, daß die Stirnstellen der einzelnen Elemente sauber verarbeitet sind, gewährleistet, daß sich ein exakt zylindrischer Körper ergibt. Wie in Figur 1 sind die Elemente mit Hilfe der Deckel 2 und 3, der Stange 4 und der Schrauben 41 und 42 miteinander verspannt. Um zu vermeiden, daß bei Verwendung kleiner Teilformate große Teile der unbedeckten Saugöffnungen geschlossen werden müssen, sind ein oder mehrere Topfböden ohne Öffnungen gefertigt. Über Ventile können die einzelnen Räume an die Vakuumleitung angeschlossen werden. Bei großen Walzen werden diese druckdichten Böden mit einer der Beanspruchung entsprechenden Form versehen (Kesselboden).

Gewerbliche Verwertbartkeit

Die bei der vorliegenden Erfindung vorgeschlagenen Walzenkörper sind besonders geeignet für Trommelscanner in dem grafischen Gewerbe oder sonstige Reproduktionsgeräte, die mit Walzen für die Aufnahme von Original oder Aufzeichnungsträger arbeiten.

## Gegenstand der Erfindung

### Patentansprüche

1. Walze für Trommelscanner, bestehend aus einem hohlen zylindrischen Körper, der an seinen Enden drehbar gelagert ist, dadurch gekennzeichnet, daß der zylindrische Walzenkörper aus einer Anzahl von topfartigen Gebilden besteht, die ineinandergeschoben und miteinander verklebt sind.

2. Walze für Trommelscanner, bestehend aus einem hohlen zylindrischen Körper, der an seinen Enden drehbar gelagert ist, dadurch gekennzeichnet, daß der zylindrische Walzenkörper aus einer Anzahl von topfartigen Gebilden und Ringen besteht, die ineinandergeschoben und miteinander verklebt sind.

3. Walze für Trommelscanner, bestehend aus einem hohlen zylindrischen Körper, der an seinen Enden gelagert ist, dadurch gekennzeichnet, daß der zylindrische Körper aus einer Anzahl von Ringen besteht, die an ihren Stoßstellen mittels Laschenringen verbunden und verklebt sind und mit einer runden Blechscheibe versehen sind.

4. Walze nach einem der Ansprüche 1 und 2, dadurch gekennzeichnet, daß die topfartigen Gebilde im Bodenbereich zum Ineinanderverschieben des nächsten topfartigen Gebildes eingezogen sind.

5. Walze nach einem der Ansprüche 1 bis 4, dadurch gekennzeichnet, daß der walzenförmige Körper an seinen Enden deckelartige Gebilde aufweist, die mittels einer durch das Innere des walzenförmigen Körpers gehenden Stange miteinander verschraubbar sind.

6. Walze nach einem der Ansprüche 1 bis 5, dadurch gekennzeichnet, daß die Oberfläche der Walze mit Saugöffnungen versehen ist, die mit einem im Inneren der Walze herrschenden Vakuum verbunden sind.

7. Walze nach einem der Ansprüche 1 bis 6, dadurch gekennzeichnet, daß einer oder mehrere der Topfböden ohne Löcher ausgeführt und druckdicht verklebt ist.

8. Walze nach Anspruch 3, dadurch gekennzeichnet, daß zusätzlich zu einem Boden oder einer runden Scheibe ein Schott druckdicht eingesetzt ist, das eine der Druckrichtung und -beanspruchung entsprechende Form aufweist.

Fig. 1

Fig. 2